# FASCICULE DE BREVET EUROPEEN

(11) **EP 2 449 803 B1**
(45) Date de publication et mention de la délivrance du brevet: **23.05.2018**
(21) Numéro de dépôt: 10745324.3
(22) Date de dépôt: 25.06.2010
(51) Int. Cl.: H04W 12/06, H04L 29/06, H04L 9/32, H04L 9/08, H04W 12/04

(54) **PROCÉDÉ DE CHANGEMENT D'UNE CLÉ D'AUTHENTIFICATION**
VERFAHREN ZUR ÄNDERUNG EINES AUTHENTIFIZIERUNGSSCHLÜSSELS
METHOD FOR CHANGING AN AUTHENTICATION KEY

(30) Priorité: 30.06.2009 FR 0954474
(43) Date de publication de la demande: 09.05.2012
(73) Titulaire: Orange, 75015 Paris (FR)
(72) Inventeur: MICHAU, Benoit, 75018 Paris (FR); ROUSSEL, Jean-Luc, F-14310 Villy Bocage (FR); COUREAU, Laurent, F-91420 Morangis (FR)
(86) Numéro de dépôt international: PCT/FR2010/051303
(87) Numéro de publication internationale: WO 2011/001076

(56) Documents cités:
- WO-A2-98/56201
- US-A1- 2005 182 802
- US-A1- 2006 183 500
- US-A1- 2008 276 090

## Description

L'invention concerne un procédé de changement d'une clé d'authentification associée à un numéro d'identification d'abonné par un module de sécurité d'un terminal de communication à travers un réseau.

L'invention trouve une application particulièrement intéressante dans le cadre de mises à jour à distance de données protégées, telles que des clés secrètes, mémorisées dans un module de sécurité inséré dans un terminal. Une telle mise à jour est par exemple adaptée pour procéder à un changement d'opérateur de réseau à distance, les données étant utilisées par exemple pour procéder à une authentification mutuelle entre le module de sécurité et le réseau afin d'accéder au réseau.

Le document US 2008/276090 décrit un procédé d'allocation d'une carte à puce à un opérateur de réseau par l'intermédiaire d'un moyen de personnalisation. Cependant le moyen de personnalisation constitue un tiers, indépendant des opérateurs, qui a connaissance d'un ensemble de clés secrètes utilisées dans le procédé d'allocation, ce qui constitue une faiblesse en matière de sécurité.

Il est connu que dans certains réseaux d'opérateur, par exemple un réseau mobile d'un opérateur choisi par un abonné, des terminaux mobiles s'authentifient auprès du réseau à partir de données d'identification et d'authentification partagées par le terminal et le réseau mobile de l'opérateur choisi. Le terminal mobile contient ces données d'identification et d'authentification dans un module de sécurité, de type carte "USIM" (de l'anglais "Universal Subscriber Identity Module"). Le module de sécurité constitue une carte d'identité de l'abonné dans le réseau mobile, il est délivré par l'opérateur lors d'une souscription d'un abonnement au réseau par l'abonné. La carte USIM du terminal mobile mémorise entre autres un identifiant "IMSI" (pour "International Mobile Subscriber Identity") qui constitue un identifiant international unique de l'abonné dans le réseau, et une clé secrète d'authentification, notée K, qui sont utilisés au cours d'un processus d'authentification mutuelle entre le module de sécurité et le réseau. La clé d'authentification K, inscrite dans la carte USIM de l'abonné n'est connue que de la carte USIM et de l'opérateur de réseau. A cet effet, l'opérateur de réseau gère une base de données appelée "AuC" (de l'anglais "Authentication Center") qui contient les identifiants IMSI et les clés d'authentification associées de l'ensemble de ses abonnés. La clé d'authentification K n'est jamais transmise sur le réseau et ne sort donc jamais de la carte USIM et de l'AuC. La clé d'authentification K est utilisée au cours d'un processus d'authentification mutuelle de l'abonné auprès du réseau de l'opérateur et du réseau auprès de l'abonné, pour accéder au réseau.

Lors d'un abonnement à un premier réseau opéré par un premier opérateur, l'abonné se voit distribuer par le premier opérateur un module de sécurité qui comprend la clé d'authentification et le numéro IMSI qui lui sont attribués dans ce réseau. Le module de sécurité est ensuite utilisé pour les accès à ce premier réseau par l'abonné. Cependant, lorsque l'abonné à ce premier réseau souhaite changer d'opérateur, et souscrire un abonnement auprès d'un deuxième opérateur, il se voit attribuer par le deuxième opérateur un deuxième module de sécurité qui comprend les données d'identification et d'authentification connues du deuxième opérateur pour ses accès au deuxième réseau. L'abonné doit alors remplacer manuellement le module de sécurité de son terminal par le deuxième module de sécurité pour accéder au deuxième réseau. En effet, il n'est pas possible de mettre à jour des données d'identification et d'authentification, et plus précisément une clé d'authentification d'abonné d'un module de sécurité autrement qu'en remplaçant manuellement le module.

On connaît des applications basées sur "la communication machine à machine" (on parle également de communication "M2M" pour "Machine to Machine") qui utilisent des réseaux mobiles d'opérateurs pour permettre à un serveur central d'échanger des informations à distance avec des équipements mobiles automatiques ou embarqués, pour relever des informations stockées sur ces équipements, ou modifier l'état de ces équipements et ce, sans intervention humaine. Lorsque ces applications opèrent dans des milieux à accès difficiles, on comprend qu'un changement d'opérateur mobile est très contraignant. En effet, il est nécessaire qu'un technicien se déplace afin de remplacer le module de sécurité existant et adapté aux communications à travers un premier réseau, par un deuxième module de sécurité, adapté aux communications à travers un deuxième réseau.

L'invention remédie au problème identifié ci-dessus en proposant un procédé tel que décrit dans la revendication 1, un système tel que décrit dans la revendication 7, un programme destiné à être installé dans une mémoire d'un module de sécurité, tel que décrit dans la revendication 8, un programme destiné à être installé dans une mémoire d'un ordinateur dans un premier réseau, tel que décrit dans la revendication 9, et un programme destiné à être installé dans une mémoire d'un ordinateur dans un deuxième réseau, tel que décrit dans la revendication 10. Dans une réalisation particulière de l'invention, un procédé de changement d'une clé d'authentification, ladite clé étant associée à un numéro d'identification d'abonné, par un module de sécurité d'un terminal de communication à travers un réseau, le module de sécurité stockant une première clé d'authentification d'abonné dans un premier réseau en association avec un premier numéro d'identification de l'abonné dans le premier réseau, ainsi qu'une clé maîtresse de génération de clés propre à un deuxième réseau, le procédé comprenant :
- une étape de réception par le module de sécurité d'un aléa fourni par le premier réseau,
- une étape de calcul par le module de sécurité d'une deuxième clé d'authentification de l'abonné dans le deuxième réseau à partir de la clé maîtresse et de l'aléa reçu,
- une étape de stockage dans le module de sécurité de la deuxième clé d'authentification calculée, en association avec un deuxième numéro d'identification.

D'emblée, on notera que le premier et le deuxième numéro d'identification peuvent être distincts l'un de l'autre, ou identiques.

Le procédé selon l'invention propose une méthode pour changer, dans un module de sécurité d'un terminal de communication, des données à l'intérieur d'un module de sécurité, comprenant notamment une clé d'authentification d'abonné d'accès protégé et un numéro d'identification d'un abonné dans un réseau de communication donné, sans intervention manuelle.

Initialement, on suppose que le module de sécurité du terminal stocke un numéro d'identification d'abonné et une clé d'authentification d'abonné dans un premier réseau. Ces données permettent au terminal de s'identifier et de s'authentifier auprès de ce premier réseau afin de s'y connecter. Selon l'invention, le changement destiné à remplacer le numéro d'identification et la clé d'authentification d'abonné dans le premier réseau par un numéro et une clé d'authentification d'abonné dans un deuxième réseau s'effectue par une communication entre le terminal et le premier réseau, lors de laquelle le terminal reçoit un numéro d'identification d'abonné dans le deuxième réseau et un aléa.

Le changement des données peut ainsi s'opérer de façon sécurisée et confidentielle. En effet, pour communiquer à travers le premier réseau, le terminal doit préalablement s'identifier et s'authentifier auprès de ce premier réseau avec le numéro d'identification et la clé d'authentification associée relatifs au premier réseau. Par conséquent, les conditions de communication sont sécurisées. En outre, l'étape de calcul d'une deuxième clé d'authentification est exécutée à l'intérieur du module de sécurité, par le module de sécurité. La deuxième clé n'est, au même titre que toute clé d'authentification d'un module de sécurité, jamais transmise à travers le réseau mais calculée d'une part par le module de sécurité, et d'autre part par le deuxième réseau. La nouvelle clé générée n'est alors connue que du deuxième opérateur qui opère le deuxième réseau. En outre, avec ce mécanisme, le niveau de confidentialité de la deuxième clé d'authentification est très élevé car la clé ne peut être mise à jour qu'au moyen de la fonction de diversification de clés DivertKey() embarquée sur le module de sécurité.

Le stockage sur le module de sécurité des clés d'authentification est réputé sécurisé. En effet, les clés d'authentification ne sont pas accessibles directement, ni en lecture, ni en écriture. Elles ne sont accessibles en lecture que par certaines fonctions de sécurité, par exemple la fonction d'authentification. Avec le procédé selon l'invention, les clés d'authentification sont réinscriptibles au moyen d'une fonction cryptographique dont l'exécution est réalisée dans et par le module de sécurité.

Dans une réalisation particulière de l'invention, le premier et le deuxième numéro d'identification étant distincts l'un de l'autre, il est prévu une étape de réception par le module de sécurité du deuxième numéro d'identification de l'abonné dans le deuxième réseau, ledit deuxième numéro d'identification étant fourni par le premier réseau.

Avec ce mode de réalisation, un changement de clé d'authentification est associé à un changement de numéro d'identification d'abonné. Ainsi, le procédé est adapté à un changement d'opérateur de réseau qui mémorise pour chacun de ses abonnés un identifiant unique d'abonné, propre à cet opérateur.

Dans ce mode de réalisation, la deuxième clé d'authentification et le deuxième numéro d'identification remplacent respectivement la première clé d'authentification et le premier numéro d'identification en mémoire dans le module de sécurité.

Le module de sécurité est adapté pour mémoriser une clé courante d'authentification d'abonné et un numéro d'identification d'abonné courant, utilisés par le module pour les accès au réseau auquel l'abonné est abonné à un instant donné. Lors de la mise en oeuvre du procédé de l'invention, correspondant à un basculement du premier réseau vers le deuxième réseau, la deuxième clé d'authentification calculée et le deuxième numéro d'identification d'abonné viennent donc remplacer dans une mémoire du module de sécurité les clé et numéro précédemment utilisés pour accéder au premier réseau.

Avantageusement, le procédé comprend en outre une étape de réception à travers le premier réseau par le module de sécurité d'une commande de mise à jour, et une étape d'envoi par le module de sécurité au terminal d'une commande de rafraîchissement de numéro d'identification et de clé d'authentification associée pour commander un basculement du premier vers le deuxième réseau.

Le basculement du premier réseau vers le deuxième réseau peut se faire à distance, automatiquement, c'est-à-dire sans mise hors tension, puis mise sous tension du terminal dans lequel le module est inséré. Dans le cas d'application M2M reposant sur des terminaux mobiles placés à des endroits difficiles d'accès, ce mode de basculement est particulièrement intéressant.

De façon avantageuse, l'aléa reçu à travers le premier réseau est construit par le premier opérateur à partir d'au moins une donnée aléatoire reçue du deuxième réseau.

Dans cet exemple de réalisation, le deuxième réseau fournit une partie de l'aléa RAND envoyé au module de sécurité par le premier réseau pour la génération de la deuxième clé d'authentification. Ainsi, l'opérateur Op_{B} du deuxième réseau est assuré du caractère aléatoire de l'aléa RAND puisqu'il contribue lui-même à cet aléa.

Dans un mode de réalisation de l'invention, une pluralité de clés maîtresses K_GEN_{A}, ..., K_GEN_{N}, propres respectivement à une pluralité de réseaux sont mémorisées dans une table KgenTab en mémoire dans le module de sécurité, en association avec une pluralité d'index respectifs, un index identifiant un réseau déterminé.

Ce mode de réalisation correspond à un cas où plusieurs changements successifs de clé d'authentification et de numéro d'identification d'abonné peuvent être réalisés. Ici, les clés maîtresses propres aux opérateurs qui sont mémorisées dans la table KgenTab sont indexées par un index qui est identique d'un module de sécurité à un autre. Ainsi, quelque soit le module de sécurité, une clé maîtresse associée à un opérateur prédéfini est toujours accessible à partir d'un index prédéfini. Ainsi, chaque opérateur de premier réseau connaît l'index à utiliser dans la table KgenTab pour accéder à la clé maîtresse du deuxième opérateur. On note qu'une clé maîtresse propre à un opérateur peut par contre être différente d'un module de sécurité à un autre.

L'invention concerne également un procédé de gestion par un premier réseau d'un changement d'une clé d'authentification associée à un numéro d'identification d'abonné par un module de sécurité d'un terminal de communication, le module de sécurité stockant une première clé d'authentification d'abonné dans un premier réseau en association avec un premier numéro d'identification de l'abonné dans le premier réseau, le procédé comprenant :
- une étape de génération d'un aléa et d'envoi de l'aléa au module de sécurité,
- une étape d'envoi à un deuxième réseau de l'aléa.

Dans un mode de réalisation du procédé de gestion selon l'invention il est prévu :
- une étape d'obtention par le premier réseau d'un deuxième numéro d'identification de l'abonné dans un deuxième réseau, et d'envoi au module de sécurité du deuxième numéro d'identification,
- une étape d'envoi du deuxième numéro d'identification de l'abonné au deuxième réseau.

L'invention porte également sur un procédé de gestion par un deuxième réseau d'un changement d'une clé d'authentification associée à un numéro d'identification d'abonné par un module de sécurité d'un terminal de communication, le module de sécurité stockant une première clé d'authentification d'abonné dans un premier réseau en association avec un premier numéro d'identification de l'abonné dans le premier réseau, ainsi qu'une clé maîtresse de génération de clés propre au deuxième réseau, le procédé comprenant :
- une étape de réception d'un aléa en provenance du premier réseau,
- une étape de calcul par le deuxième réseau d'une deuxième clé d'authentification de l'abonné dans le deuxième réseau à partir de la clé maîtresse et de l'aléa,
- une étape de mémorisation de la deuxième clé d'authentification en association avec un deuxième numéro d'identification d'abonné dans le deuxième réseau.

L'invention concerne également un système initiateur d'un changement d'une clé d'authentification, ladite clé étant associée à un numéro d'identification d'abonné, par un module de sécurité d'un terminal de communication à travers un réseau, le module de sécurité stockant une première clé d'authentification d'abonné dans un premier réseau en association avec un premier numéro d'identification de l'abonné dans le premier réseau, le système comprenant :
- des moyens de génération d'aléas, agencés pour générer un aléa,
- des moyens d'envoi, agencés pour envoyer au module de sécurité et au deuxième réseau l'aléa généré.

L'invention concerne aussi un système cible d'un changement d'une clé d'authentification, ladite clé étant associée à un numéro d'identification d'abonné, par un module de sécurité d'un terminal de communication à travers un réseau, le module de sécurité stockant une première clé d'authentification d'abonné dans un premier réseau en association avec un premier numéro d'identification de l'abonné dans le premier réseau, ainsi qu'une clé maîtresse de génération de clés propre à un deuxième réseau , le système comprenant :
- des moyens de réception, agencés pour recevoir un aléa en provenance du premier réseau,
- des moyens de calcul, agencés pour calculer une deuxième clé d'authentification de l'abonné dans le deuxième réseau à partir de la clé maîtresse et de l'aléa,
- des moyens de mémorisation, agencés pour mémoriser la deuxième clé d'authentification calculée en association avec un deuxième numéro d'identification d'abonné dans le deuxième réseau.

L'invention porte également sur un module de sécurité d'un terminal de communication à travers un réseau comprenant :
- une première zone mémoire adaptée pour mémoriser une première clé d'authentification de l'abonné dans un premier réseau, et une clé maîtresse de génération de clés propre à un deuxième réseau, et une deuxième zone mémoire adaptée pour mémoriser un premier numéro d'identification d'abonné en association avec la première clé d'authentification,
- des moyens de réception d'aléa, agencés pour recevoir à travers le premier réseau par l'intermédiaire du terminal un aléa,
- des moyens de calcul, agencés pour calculer une deuxième clé d'authentification de l'abonné dans le deuxième réseau à partir de la clé maîtresse propre au deuxième réseau et de l'aléa,
- des moyens de stockage, agencés pour stocker la deuxième clé d'authentification calculée, en association avec un deuxième numéro d'identification de l'abonné dans le deuxième réseau.

L'invention concerne également un terminal mobile comprenant un module de sécurité selon l'invention.

L'invention porte aussi sur un programme destiné à être installé dans une mémoire d'un module de sécurité, comprenant des instructions pour la mise en oeuvre des étapes du procédé de changement d'une clé d'authentification selon l'invention qui sont exécutées par le module, lorsque le programme est exécuté par un processeur.

L'invention concerne aussi un programme destiné à être installé dans une mémoire d'un ordinateur, comprenant des instructions pour la mise en oeuvre des étapes du procédé de gestion par un premier réseau d'un changement d'une clé d'authentification selon l'invention, lorsque le programme est exécuté par un processeur.

L'invention concerne aussi un programme destiné à être installé dans une mémoire d'un ordinateur, comprenant des instructions pour la mise en oeuvre des étapes du procédé de gestion par un deuxième réseau d'un changement d'une clé d'authentification selon l'invention, lorsque le programme est exécuté par un processeur.

De nombreux détails et avantages de l'invention seront mieux compris à la lecture de la description d'un mode particulier de réalisation, en référence aux dessins annexés donnés à titre non limitatif, et dans lesquels :
- la figure 1 représente les étapes d'un procédé de changement d'un d'une clé d'authentification associée à un numéro d'identification d'abonné par un module de sécurité d'un terminal de communication à travers un réseau, selon un mode particulier de réalisation de l'invention ;
- la figure 2 représente les étapes du procédé selon un deuxième mode de réalisation ;
- la figure 3 représente un exemple d'architecture d'un module de sécurité selon l'invention ;
- la figure 4 représente un système initiateur et cible d'un changement de numéro d'identification d'abonné et de clé d'authentification associée, selon un mode particulier de réalisation de l'invention.

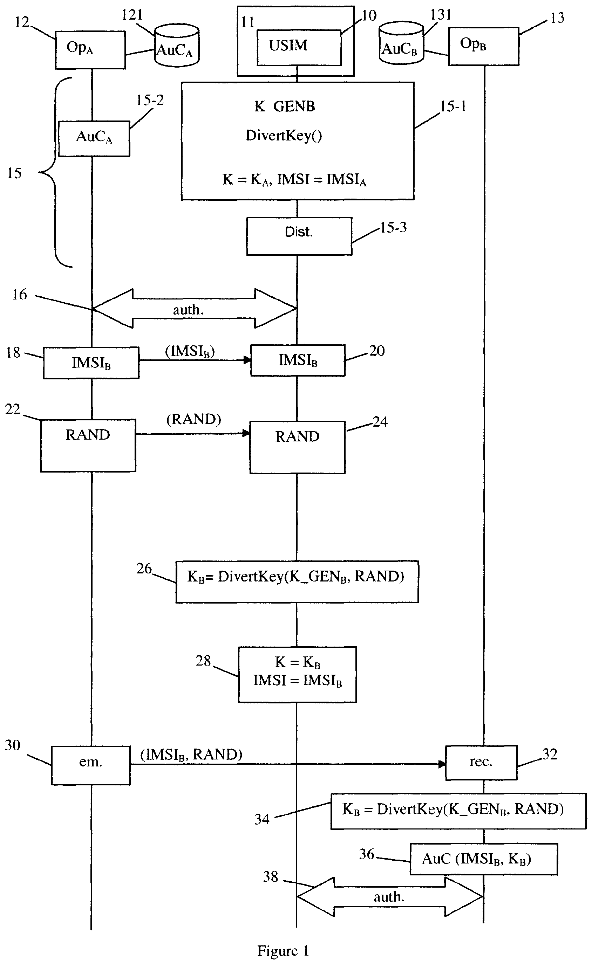

Le procédé de changement d'une clé d'authentification associée à un numéro d'identification d'abonné par un module de sécurité d'un terminal va maintenant être décrit en relation avec la figure 1.

Un module de sécurité 10 est inséré dans un terminal 11 de communication à travers un réseau. Le module de sécurité 10 est par exemple une carte "USIM" (de l'anglais "Universal Subscriber Identity Module"), insérée dans un terminal mobile adapté pour communiquer dans un réseau mobile, par exemple un réseau "UMTS" (pour "Universal Mobile Telecommunication System"). Le module de sécurité 10 est utilisé par le terminal 11 pour communiquer avec un réseau donné. Dans la présente description, on suppose qu'initialement le terminal 11 en coopération avec son module de sécurité 10 est apte à communiquer à travers un premier réseau de communication 12, opéré par un premier opérateur Op_{A}. Une fois le procédé de l'invention mis en oeuvre, le terminal 11 en coopération avec son module de sécurité 10 est apte à communiquer à travers un deuxième réseau de communication 13, opéré par un deuxième opérateur Op_{B} et n'est plus apte à communiquer avec le premier réseau de communication 12, opéré par le premier opérateur Op_{A}. Par définition,
- les termes "premier réseau 12", respectivement "deuxième réseau 13" désignent l'infrastructure utilisée,
- les termes "premier opérateur Op_{A}", respectivement "deuxième opérateur Op_{B}", désignent l'entité qui opère le premier réseau, respectivement le deuxième réseau, pour toutes les opérations de gestion et de communication relatives à ce réseau.

Il est connu que pour accéder à un réseau de communication, ici un réseau mobile de type UMTS, un module de sécurité est configuré en usine pour stocker des données d'abonnement. Les données d'abonnement sont adaptées, entre autres, pour identifier et authentifier un abonné lors de son accès à ce réseau. Ces données comprennent un numéro d'identification d'abonné courant, plus connu sous l'acronyme d'"IMSI" (pour "International Mobile Subscriber Identity"), et une clé d'authentification courante, notée K. Ces données sont utilisées par des algorithmes cryptographiques, notés F3/F4 dans le réseau UMTS, au cours d'une phase d'authentification de l'abonné lors de son accès au réseau, et pour sécuriser les communications. Les données d'identification et d'authentification, en l'espèce le numéro d'identification unique d'abonné IMSI et la clé d'authentification K, mémorisées dans le module de sécurité sont distribuées à l'abonné lors de son abonnement au réseau. L'abonné reçoit à cet effet le module de sécurité qui mémorise ces données. D'autre part, lors de cet abonnement, le réseau mémorise dans une base de données appelée "Authentication Center" (ou "AuC" pour centre d'authentification) le couple comprenant le numéro d'identification d'abonné IMSI et la clé d'authentification K associée. Ainsi, le réseau et le module de sécurité partagent la clé d'authentification K associée au numéro d'identification d'abonné unique IMSI.

Au cours d'une phase préalable d'abonnement 15 de l'abonné au premier réseau 12, dans une étape 15-1 de configuration du module de sécurité 10, il est mémorisé dans le module de sécurité 10 comme numéro IMSI d'identification unique d'abonné courant, un premier numéro d'identification d'abonné, noté IMSI_{A}, et comme clé d'authentification K courante, une première clé d'authentification, notée K_{A}, propres à l'abonné dans le premier réseau 12. Il est également mémorisé dans le module de sécurité 10 au cours de l'étape de configuration 15-1, des données adaptées pour mettre en oeuvre le procédé de l'invention :
- une clé maîtresse K_GEN_{B}, associée à l'opérateur de réseau Op_{B} qui opère le deuxième réseau 13,
- un algorithme de diversification de clés, noté DivertKey(), apte à dériver des clés à partir d'une clé maîtresse et d'un aléa.

Cette étape de configuration 15-1 est réalisée en usine, par un encarteur apte à fabriquer et configurer des modules de sécurité pour le premier réseau 12. Le premier réseau 12 mémorise également dans une étape 15-2 d'enregistrement, le numéro ISMI_{A} et la clé d'authentification K_{A} associée dans une base de données d'authentification AuC_{A} propre au premier réseau 12.

En fin de phase d'abonnement 15, dans une étape 15-3 de distribution, le module de sécurité 10 est fourni à l'abonné. L'abonné insère le module de sécurité 10 dans son terminal 11.

Dans une phase 16 d'authentification mutuelle avec le premier réseau 12, ultérieure à la phase d'abonnement 15 et schématisée par une flèche épaisse, une authentification mutuelle entre le module de sécurité 10 et le premier réseau 12 est réalisée, par exemple suite à une mise sous tension du terminal 11 par l'abonné. Au cours de cette phase 16 d'authentification, le numéro d'identification d'abonné IMSI_{A} et la clé d'authentification K_{A} de l'abonné dans le premier réseau 12 sont utilisés. On ne détaille pas les étapes de cette phase qui est réputée connue. Au terme de cette phase 16 d'authentification, le module de sécurité 10 est reconnu comme authentique par le premier réseau 12, et le premier réseau 12 comme authentique par le module 10. Des communications peuvent ensuite être établies par le terminal 11 à travers le premier réseau 12.

Dans une étape 18 d'obtention d'un deuxième numéro d'identification, le premier réseau 12 obtient un deuxième numéro d'identification IMSI_{B} pour l'abonné du terminal 11. Ce deuxième numéro d'identification IMSI_{B} de l'abonné est adapté pour identifier l'abonné de façon unique dans le deuxième réseau 13. Dans l'exemple particulier décrit ici, le deuxième numéro d'identification IMSI_{B} est obtenu par le premier réseau 12 en réponse à une requête du premier réseau 12 au deuxième réseau 13. Le premier réseau transmet le deuxième numéro d'identification IMSI_{B} au module 10 par l'intermédiaire du terminal 11. Il est reçu par le module de sécurité 10 dans une étape 20.

Dans une étape 22 de génération d'un aléa et d'envoi au module de sécurité 10, le premier réseau 12 génère un aléa RAND. L'aléa RAND généré, est envoyé par le premier réseau 12 au module de sécurité 10 par l'intermédiaire du terminal 11. L'aléa RAND est reçu par le module de sécurité 10 dans une étape 24 de réception d'aléa.

Dans une variante de réalisation, l'aléa RAND et le deuxième numéro d'identification IMSI_{B} sont transmis en même temps au module de sécurité 10.

Dans une étape 26 de calcul d'une deuxième clé d'authentification, le module de sécurité 10 calcule une deuxième clé d'authentification K_{B}. Cette deuxième clé K_{B} est obtenue en appliquant l'algorithme de diversification DivertKey() à la clé maîtresse K_GEN_{B} propre au deuxième réseau 13 et mémorisée dans le module de sécurité 10, et à l'aléa RAND reçu du premier réseau 12 au cours de l'étape 24.

Dans une étape de mémorisation 28, le numéro d'identification d'abonné courant IMSI et la clé d'authentification courante K de l'abonné sont mis à jour. Par les expressions "numéro d'identification d'abonné courant" et "clé d'authentification courante", on entend désigner le numéro d'identification et la clé d'authentification valides, aptes à être utilisés par le terminal 11, en coopération avec le module de sécurité 10, pour se connecter à un réseau donné. Ainsi, le numéro d'identification courant IMSI du module de sécurité 10 est mis à jour avec le deuxième numéro d'identification IMSI_{B}, et la clé d'authentification courante K du module 10 est mise à jour avec la deuxième clé d'authentification K_{B}. Autrement dit, le premier numéro d'identification d'abonné IMSI_{A} et la première clé d'authentification K_{A} sont remplacés par le deuxième numéro d'identification IMSI_{B} et par la deuxième clé d'authentification K_{B} en mémoire dans le module de sécurité 10.

Dans une étape d'envoi 30, le premier réseau 12 envoie au deuxième réseau 13 un message comprenant le deuxième numéro d'identification de l'abonné IMSI_{B} dans le deuxième réseau 13 ainsi que l'aléa RAND généré dans le premier réseau 12 au cours de l'étape 22 de génération d'aléa. Le message est reçu par le deuxième réseau 13 dans une étape 32 de réception.

Dans une étape 34 de génération d'une deuxième clé d'authentification, le deuxième réseau 13 génère la deuxième clé d'authentification K_{B}. A cette fin, le deuxième réseau 13 applique l'algorithme de diversification DivertKey() à la clé maîtresse K_GEN_{B} connue du deuxième réseau 13 et à l'aléa RAND reçu du premier réseau 12. Le deuxième réseau 13 met à jour sa base de données AuC_{B} dans une étape 36 et de mise à jour de la base d'authentification en mémorisant un couple comprenant le deuxième numéro d'identification IMSI_{B} et la deuxième clé d'authentification K_{B} associée.

Dans une phase 38 d'authentification mutuelle avec le deuxième réseau 13, schématisée par une flèche épaisse et comparable à la phase 16 d'authentification mutuelle avec le premier réseau, une authentification mutuelle entre le module de sécurité 10 et le deuxième réseau 13 est réalisée. Cette phase est déclenchée par exemple après une réinitialisation manuelle du terminal 11 (c'est-à-dire une mise hors tension suivie d'une mise sous tension). Cette phase peut également être déclenchée automatiquement au moyen d'une commande de rafraîchissement du numéro d'identification d'abonné et de la clé d'authentification associée envoyée par le module de sécurité 10 au terminal 11. L'exécution de cette commande de rafraîchissement peut être déclenchée à distance à travers le premier réseau 12 qui, au moyen d'une commande "OTA" (pour "Over The Air") de mise à jour déclenche l'exécution sur le module de sécurité 10 d'une application qui envoie la commande de rafraîchissement au terminal 11. Cette phase 38 d'authentification mutuelle provoque un basculement du terminal 11 du premier réseau 12 vers le deuxième réseau 13.

On peut envisager de garder le même numéro d'identification d'abonné en passant du premier réseau 12 au deuxième réseau 13. Dans ce cas, le deuxième numéro d'identification IMSI_{B} est identique au premier numéro d'identification IMSI_{A}. Dans ce cas, le numéro d'identification n'a pas besoin d'être transmis au module de sécurité au cours de l'étape 18 d'obtention d'un deuxième numéro d'identification et d'envoi du deuxième numéro d'identification d'obtention, et au cours de l'étape 30 d'envoi.

Il est connu qu'une diversification de clés consiste en un algorithme, par exemple un algorithme cryptographique adapté pour dériver à partir d'une clé maîtresse et d'au moins un opérande, par exemple un aléa, ou un identifiant, une clé dite clé dérivée. Un algorithme de diversification présente des propriétés spécifiques : en particulier, avec un tel algorithme il ne doit pas être possible d'identifier, à partir d'une clé dérivée et du ou des opérandes, la clé maîtresse utilisée pour faire la diversification. Plusieurs algorithmes cryptographiques peuvent être utilisés comme algorithmes de diversification de clés, par exemple des fonctions "MAC" (pour "Message Authentication Code"), ou "HMAC" (pour "Hash Message Authentication Code"). Des générateurs Pseudo-aléatoires peuvent également être utilisés (voir "techniques for Low Cost Authentication and Data Authentication", H.Gilbert, Proceedings of CARDIS '98, Lecture Notes in Computer Science, Vol.1820, pp.183-192, Springer Verlag). Un autre exemple d'algorithme de diversification connu est l'algorithme "KDF" (pour "Key Dérivation Function") utilisé dans l'architecture d'authentification "GBA" (de l'anglais "Generic Bootstrapping Architecture") et décrit dans la spécification 3GPP TS 33.220, Annexe B, téléchargeable sur le site : ftp://ftp.3gpp.org/Specs/html-info/33220.htm.

Dans une variante de réalisation, le premier réseau 12 mémorise dans une base de données un nombre prédéterminé de numéros d'identification propres au deuxième réseau 13 et préalablement fournis par celui-ci. Dans ce cas, pour réaliser l'étape 18 d'obtention d'un deuxième numéro d'identification le premier réseau 12 sélectionne un numéro d'identification non précédemment sélectionné et propre au deuxième réseau 13 dans sa base de données, par exemple de façon aléatoire.

Dans une variante de réalisation, l'aléa RAND envoyé à travers le premier réseau 12 à l'étape 22 est construit dans le premier réseau 12 à partir d'un premier aléa aleal (non représenté) généré par le premier réseau 12 et d'un deuxième aléa alea2 (non représenté) généré par le deuxième réseau 13 et transmis au premier réseau 12. L'aléa RAND est obtenu par exemple par une opération de OU EXCLUSIF entre les aléas alea1 et alea2.

Les première et deuxième clés d'authentification K_{A} et K_{B}, ainsi que la clé maîtresse K_GEN_{B} sont mémorisées dans une mémoire réinscriptible du module de sécurité (non représentée sur la figure 1). L'accès à ces clés est protégé en lecture et en écriture. Ainsi, elles ne sont pas accessibles depuis l'extérieur du module de sécurité. Elles ne sont accessibles en lecture que par certaines fonctions de sécurité, par exemple la fonction d'authentification mise en oeuvre au cours des étapes d'authentification 16 et 38. En outre, avec le procédé selon l'invention, les clés d'authentification sont réinscriptibles au moyen d'une fonction cryptographique, l'algorithme de diversification de clé DivertKey() dont l'exécution est réalisée dans et par le module de sécurité.

Le procédé est décrit ici dans le cadre d'un réseau mobile de type UMTS. L'invention n'est pas limitée à ce type de réseau. Ainsi, l'invention s'applique également à des réseaux de type "HSPA" (pour "High Speed Packet Access"), ou des réseaux conformes à la technologie "LTE" (de l'anglais "Long Term Evolution"). Plus généralement, l'invention est applicable à des domaines qui utilisent ce type de mécanisme à clé secrète associant un module de sécurité dans lequel est mémorisé la clé secrète à une entité qui réalise une authentification du module. Ainsi, des applications de l'invention sont également possibles dans le domaine bancaire, ou dans le domaine de la protection des contenus, notamment dans des applications de télévision à péage.

De même l'invention est décrite ici pour des numéros d'identification d'abonné et pour des clés d'authentification utilisés au cours d'une identification et une authentification de l'abonné pour accéder au réseau. L'invention ne se limite pas à ce type de données. Ainsi, l'invention s'applique également à des numéros d'identification d'abonné et à des clés d'authentification utilisés pour accéder à des services ou des applications particulières, par exemple des applications qui reposent sur l'architecture d'authentification GBA.

Dans une variante de réalisation, la clé maîtresse K_GEN_{B} propre au deuxième réseau et installée dans le module de sécurité au cours de l'étape 15-1 de configuration est également propre au module de sécurité. Notons cette clé maîtresse propre au deuxième réseau et au module de sécurité K_GEN_{BS}. La clé K_GEN_{BS} peut être calculée à partir d'une clé propre au deuxième opérateur et connue uniquement de cet opérateur (notons cette clé K_GEN_{B'}) et d'un numéro de série propre au module de sécurité. La clé maîtresse K_GEN_{BS} peut être obtenue au moyen d'un deuxième algorithme cryptographique de diversification de clés, paramétré par la clé propre au deuxième opérateur K_GEN_{B'} et par le numéro de série de la carte. Ainsi, un module de sécurité mémorise la clé maîtresse K_GEN_{BS} propre au deuxième réseau et à ce module dans l'étape de configuration 15-1. Dans ce mode de réalisation, il est prévu que le premier réseau 12 envoie au deuxième réseau 13 dans l'étape d'envoi 30 le numéro de série du module de sécurité. Le numéro de série du module de sécurité peut être obtenu par le premier réseau par exemple par interrogation de ce module. Ainsi, préalablement à l'étape 34 de génération d'une deuxième clé d'authentification, dans une étape non représentée, le deuxième réseau 13 calcule au moyen du deuxième algorithme de diversification paramétré par la clé propre au deuxième opérateur K_GEN_{B'} et le numéro de série reçu, la clé maîtresse K_GEN_{BS} propre au deuxième réseau et au module de sécurité. La clé K_GEN_{BS} est alors utilisée au cours de l'étape 34 de génération pour calculer la deuxième clé d'authentification K_{B}. Dans cette variante, la sécurité est renforcée car le clé maîtresse K_GEN_{B'} n'est connue que du deuxième réseau 13 et n'est pas installée dans le module de sécurité.

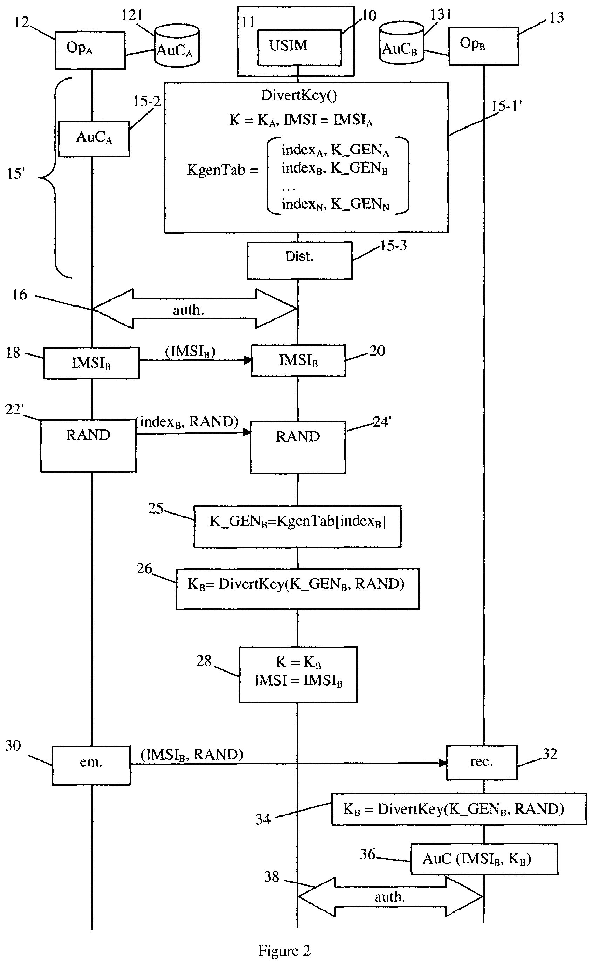

Un deuxième mode de réalisation du procédé va maintenant être décrit en relation avec la figure 2. Avec ce mode de réalisation, il est possible de changer de numéro d'identification et de clé d'authentification plusieurs fois, ou plus précisément, d'accéder successivement à une pluralité de réseaux opérés par des opérateurs différents. Dans ce mode de réalisation, le module de sécurité 10 est adapté pour permettre ces changements sans intervention manuelle particulière, c'est-à-dire sans remplacement de ce module.

Dans cette variante, au cours d'une phase 15' de configuration, dans une étape 15-1' de configuration, il est mémorisé dans le module 10 de sécurité une table, notée KgenTab qui comprend une pluralité de clés maîtresses K_GEN_{A}, K_GEN_{B}, ..., K_GEN_{N}. Chacune des clés maîtresses est propre à un opérateur pour un module de sécurité donné, respectivement Op_{A}, Op_{B}, ..., Op_{N} (seuls Op_{A} et Op_{B} sont représentés sur la figure 1). Un index, index_{J}, avec 1 ≤ J ≤ N, de parcours de la table KgenTab permet d'accéder à une clé maîtresse K_GEN_{J} représentative de l'opérateur Op_{J} (KgenTab[index_{J}] = K_GEN_{J}). Dans ce mode de réalisation, les index respectifs de chacun des opérateurs Op_{A}, ..., Op_{N} sont les mêmes, d'un module de sécurité à un autre et ils sont connus de tous les opérateurs. Ainsi chaque opérateur connaît la valeur de l'index qui permet d'accéder à la clé maîtresse associée à un autre opérateur particulier. On note que d'un module de sécurité à un autre, une clé maîtresse propre à un opérateur peut être différente, seul l'index associé à cet opérateur ne change pas.

Les étapes 15-2 d'enregistrement et 15-3 de distribution sont identiques aux étapes 15-2 et 15-3 selon la figure 1.

La phase 16 d'authentification mutuelle est identique à la phase 16 selon la figure 1. L'étape 18 d'obtention d'un deuxième numéro d'identification est identique à l'étape 18 selon la figure 1. L'étape 20 de réception du deuxième numéro d'identification est identique à l'étape 20 selon la figure 1.

Dans une étape 22' de génération d'un aléa et d'envoi de l'aléa et d'un index au module de sécurité 10, il est généré dans le premier réseau 12 un aléa RAND. En fin d'étape 22', le premier réseau 12 envoie au module de sécurité 10 l'aléa RAND généré, ainsi que l'index index_{B} associé à l'opérateur Op_{B} qui opère le deuxième réseau 13. L'aléa RAND et l'index index_{B} sont reçus par le module de sécurité 10 par l'intermédiaire du terminal 11 dans une étape 24'.

Dans une étape de sélection 25', le module de sécurité 10 sélectionne à partir de l'index reçu index_{B} la clé maîtresse K_GEN_{B} à utiliser dans l'étape ultérieure 26 de calcul d'une deuxième clé d'authentification. La clé maîtresse à utiliser correspond à la index_{B}-ième clé stockée dans la table KgenTab (K_GEN_{B} = KgenTab[index_{B}]). L'étape 26 de calcul d'une deuxième clé est identique à l'étape 26 selon la figure 1.

Les étapes suivantes du procédé, en l'espèce l'étape 28 de mémorisation, l'étape 30 d'envoi, l'étape 32 de réception, l'étape 34 de génération d'une deuxième clé, l'étape 36 de mise à jour de la base d'authentification et la phase 38 d'authentification mutuelle sont identiques aux étapes 28, 30, 32, 34, 36 et à la phase 38 selon la figure 1.

Ainsi, le présent mode de réalisation est décrit ici pour permettre un changement de numéro d'identification d'abonné et de clé d'authentification associée depuis le premier réseau 12 vers le deuxième réseau 13. On comprend que pour permettre un nombre prédéfini de changements successifs, sans intervention sur le module de sécurité 10, il faut réitérer ce procédé le nombre prédéfini de fois.

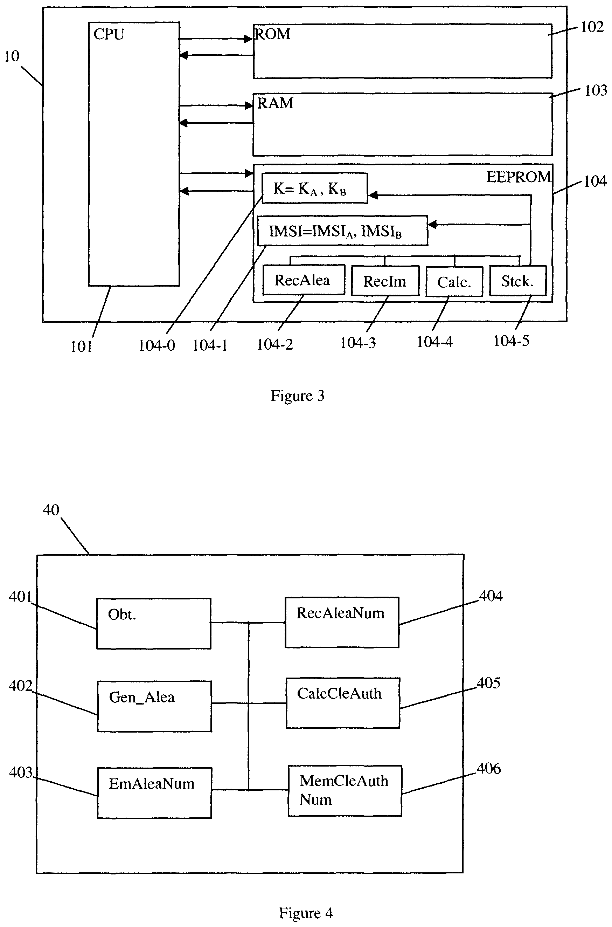

Un module de sécurité selon l'invention va maintenant être décrit en relation avec la figure 3. Par définition, un module de sécurité désigne un module apte à réaliser des opérations critiques, sensibles dans un environnement sécurisé, protégé ; ces opérations sont par exemple le stockage de données secrètes, confidentielles (par exemple une clé secrète), ou des données à besoin d'intégrité, ou bien des opérations cryptographiques (par exemple, une opération de diversification de clé).

Un tel module comprend :
- un processeur 101, ou "CPU" (de l'anglais "Central Processing Unit"), ou unité de traitement. Le processeur 101 est relié à un ensemble de mémoires :
- une mémoire morte 102, ou mémoire non volatile, ou "ROM" (pour "Read Only Memory"), adaptée pour mémoriser un système d'exploitation du module de sécurité, des mécanismes de sécurité, comme par exemple des algorithmes cryptographiques. Par exemple, lorsque le module de sécurité est une carte USIM utilisée pour accéder au réseau UMTS, la mémoire ROM 102 mémorise entre autres des algorithmes cryptographiques, par exemple un algorithme de chiffrement, et des fonctions de sécurité. La mémoire ROM 102 peut comprendre également des applications spécifiques et un environnement de développement et d'exécution appelé "Card Application Toolkit" qui définit toutes les commandes que le module 10 peut envoyer à un terminal dans lequel il est installé,
- une mémoire vive 103, ou "RAM" (pour "Random Access Memory), permet d'effectuer des calculs, de charger des instructions et de les exécuter,
- une mémoire programmable et effaçable 104, ou "EEPROM" (pour "Electrically Erasable Programmable Read Only Memory") contient des éléments propres à l'abonné et au type de réseau pour lequel le module est prévu, tels que le numéro d'identification d'abonné (IMSI), des numéros de téléphone d'abonné, et des données liées à des applications exécutables de type applet. La mémoire EEPROM 104 mémorise également les clés d'authentification utilisées par le procédé décrit précédemment, ainsi que les clés maîtresses utilisées par l'algorithme de diversification de clés. Dans le premier mode de réalisation de l'invention, la mémoire EEPROM 104 mémorise dans une zone mémoire 104-0 une clé d'authentification courante K qui lors de la mise en oeuvre du procédé de l'invention, en phase de configuration, correspond à la première clé d'authentification K_{A} d'abonné dans le premier réseau. La clé d'authentification courante K est ensuite mise à jour par le procédé avec la deuxième clé d'authentification K_{B} d'abonné. La mémoire EEPROM 104 mémorise également dans une première zone mémoire 104-0 la clé maîtresse K_GEN_{B} propre au deuxième réseau. Dans la variante de réalisation de procédé décrite en relation avec la figure 2, la mémoire EEPROM 104 mémorise dans la zone mémoire 104-0 la table KgenTab des clés maîtresses. Ces clés d'authentification ne sont pas accessibles en lecture depuis l'extérieur du module de sécurité. La mémoire EEPROM 104 mémorise également dans une deuxième zone mémoire 104-1 le numéro d'identification courant d'abonné IMSI associé à la clé d'authentification courante K. Selon la description du procédé, le numéro d'abonné IMSI courant prend les valeurs IMSI_{A} et IMSI_{B}.

Dans une variante de réalisation non décrite, la clé maîtresse K_GEN_{B} (ou la table des clés KgenTab) est mémorisée dans la mémoire ROM 102 lors de la fabrication du module.

Le module de sécurité 10 héberge également une application sous forme d'un programme, apte à mettre en oeuvre les étapes du procédé de l'invention. A cette fin, le module comprend :
- des moyens de réception d'aléa 104-2, agencés pour recevoir à travers le premier réseau et par l'intermédiaire du terminal un aléa RAND,
- des moyens 104-3 de réception de deuxième numéro d'identification, agencés pour recevoir à travers le premier réseau et par l'intermédiaire du terminal le deuxième numéro d'identification d'abonné IMSI_{B},
- des moyens de calcul 104-4, agencés pour calculer une deuxième clé d'authentification K_{B} de l'abonné dans le deuxième réseau à partir de la clé maîtresse propre au deuxième réseau et de l'aléa reçu par les moyens 104-2,
- des moyens de stockage 104-5, agencés pour mémoriser la deuxième clé d'authentification calculée par les moyens 104-4, en association avec le deuxième numéro d'identification reçu par les moyens de réception de numéro d'identification 104-2, à la place de la clé d'authentification K et du numéro d'identification d'abonné IMSI courants.

Les moyens 104-2 mettent en oeuvre l'étape 24 décrite précédemment. Les moyens 104-3 mettent en oeuvre l'étape 20 décrite précédemment.

Les moyens 104-4 mettent en oeuvre l'étape 26 du procédé. Les moyens 104-5 mettent en oeuvre l'étape 28 décrite précédemment.

Dans une variante de réalisation correspondant au cas où il est possible de changer plusieurs fois de clé d'authentification et de numéro d'identification, les moyens 104-2 de réception sont également adaptés pour recevoir l'index index_{B} associé à la clé maîtresse K_GEN_{B} dans la table KgenTab. Dans cette variante, le module comprend également des moyens de sélection (non représentés sur la figure 3), adaptés pour sélectionner à partir de l'index reçu index_{B} la clé maîtresse K_GEN_{B} à utiliser par les moyens de calcul 104-4 pour calculer la deuxième clé d'authentification K_{B}.

Dans l'exemple présenté avec la figure 3, les moyens décrits précédemment sont installés par le fabricant de modules de sécurité dans la mémoire EEPROM 104 avant que le terminal ne soit commercialisé.

Dans un deuxième exemple de réalisation, les moyens décrits sont installés par le fabricant de modules dans la mémoire ROM 102.

Dans un troisième exemple de réalisation, certains moyens sont installés en mémoire ROM 102 et d'autres en mémoire EEPROM 104. Par exemple, les moyens de calcul 104-4 de la deuxième clé d'authentification peuvent être installés dans la mémoire ROM 102, et les autres moyens en EEPROM 104.

Dans un autre exemple de réalisation de l'invention, le programme est téléchargé, installé à partir d'un menu du terminal après que l'utilisateur ait fait l'acquisition de son terminal. Dans le cas d'une installation après émission du terminal, le programme s'appuie sur une architecture conforme aux spécifications du standard Global Platform.

Un système 40 initiateur et cible d'un changement de numéro d'identification et de clé d'authentification va maintenant être décrit en relation avec la figure 4. Un tel système 40 est adapté pour mettre en oeuvre les étapes du procédé de changement d'un numéro d'identification d'abonné et d'une clé d'authentification associée par un module de sécurité d'un terminal de communication à travers un premier réseau, lorsque ces étapes sont réalisées par le premier réseau initiateur du changement, ou lorsque ces étapes sont réalisées par le deuxième réseau, ou réseau cible du changement. En effet, un réseau est généralement adapté à la fois pour initier un changement et pour être la cible d'un changement. On rappelle que le module de sécurité (non représenté sur la figure 4) mémorise un premier numéro d'identification d'abonné IMSI_{A} en association avec une première clé d'authentification K_{A} de l'abonné dans le premier réseau de communication, ainsi qu'une clé maîtresse K_GEN_{B} de dérivation de clés propres au deuxième réseau. Le système 40 comprend :
- des moyens 401 d'obtention, agencés pour obtenir à travers le premier réseau un deuxième numéro d'identification IMSI_{B} de l'abonné dans le deuxième réseau,
- des moyens 402 de génération d'aléas, agencés pour générer à travers le premier réseau un aléa RAND,
- des moyens 403 d'envoi, agencés pour envoyer au module de sécurité et au deuxième réseau l'aléa et le deuxième numéro d'identification obtenu.
- des moyens 404 de réception, agencés pour recevoir à travers le premier réseau un aléa et un deuxième numéro d'identification d'abonné,
- des moyens 405 de calcul, agencés pour calculer une deuxième clé d'authentification K_{B} de l'abonné dans le deuxième réseau à partir de la clé maîtresse et de l'aléa,
- des moyens 406 de mémorisation, agencés pour mémoriser le deuxième numéro d'identification d'abonné, en association avec la deuxième clé d'authentification.

Les moyens 401 mettent en oeuvre dans le premier réseau l'étape 18 d'obtention d'un deuxième numéro d'identification de l'abonné dans le deuxième réseau. Les moyens 402 mettent en oeuvre dans le premier réseau les étapes 22, 22' de génération d'aléa. Les moyens 403 mettent en oeuvre dans le premier réseau l'étape 30 d'envoi de l'aléa et du deuxième numéro au deuxième réseau.

Les moyens 404 mettent en oeuvre dans le deuxième réseau l'étape 32 de réception. Les moyens 405 mettent en oeuvre dans le deuxième réseau l'étape 34 de génération d'une deuxième clé d'authentification et les moyens 406 mettent en oeuvre l'étape 36 de mise à jour de la base d'authentification. Il s'agit de préférence de modules logiciels comprenant des instructions logicielles pour faire exécuter les étapes du procédé selon l'invention.

Les moyens 401, 402, 403, 404, 405 et 406 peuvent être stockés sur un même ordinateur d'un réseau ou sur des ordinateurs différents.

L'invention concerne donc aussi :
- des programmes d'ordinateur comportant des instructions pour la mise en oeuvre du procédé par le premier réseau et par le deuxième réseau, lorsque ces programmes sont exécutés par un processeur ;
- un support d'enregistrement lisible par un ordinateur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

## Revendications

1. Procédé de changement d'une clé d'authentification (K), ladite clé étant associée à un numéro d'identification d'abonné (IMSI) par un module de sécurité d'un terminal de communication à travers un réseau, le module de sécurité stockant une première clé d'authentification (K_{A}) d'abonné dans un premier réseau (12) en association avec un premier numéro d'identification de l'abonné (IMSI_{A}) dans le premier réseau, ainsi qu'une clé maîtresse (K_GEN_{B}) de génération de clés propre à un deuxième réseau (13), procédé **caractérisé en ce que** :
- le premier réseau génère un aléa (RAND) et envoie (22, 22', 30) ledit aléa au module de sécurité et au deuxième réseau,
- le module de sécurité reçoit (20) un deuxième numéro d'identification (IMSI_{B}) de l'abonné dans le deuxième réseau, ledit deuxième numéro d'identification étant distinct du premier numéro d'identification, ledit deuxième numéro d'identification étant fourni par le premier réseau,
- le module de sécurité reçoit (24, 24') l'aléa envoyé par le premier réseau, calcule (26), une deuxième clé d'authentification (K_{B}) de l'abonné dans le deuxième réseau à partir de la clé maîtresse et de l'aléa reçu et stocke (32) la deuxième clé d'authentification calculée (K= K_{B}), en association avec un deuxième numéro d'identification (IMSI= IMSI_{B}),
- le deuxième réseau calcule (34) la deuxième clé d'authentification (K_{B}) de l'abonné dans le deuxième réseau à partir de la clé maîtresse et de l'aléa reçu du premier réseau, et mémorise (36) la deuxième clé d'authentification en association avec un deuxième numéro d'identification d'abonné dans le deuxième réseau,
- le terminal est basculé du premier réseau vers le deuxième réseau, consécutivement à une authentification mutuelle (38) du terminal et du deuxième réseau.

2. Procédé selon la revendication 1 dans lequel la deuxième clé d'authentification (K_{B}) et le deuxième numéro d'identification (IMSI_{B}) remplacent respectivement la première clé d'authentification et le premier numéro d'identification (IMSI) en mémoire dans le module de sécurité (10).

3. Procédé selon la revendication 2, comprenant en outre une étape de réception à travers le premier réseau par le module de sécurité d'une commande de mise à jour, et une étape d'envoi par le module de sécurité au terminal d'une commande de rafraîchissement de numéro d'identification et de clé d'authentification associée pour commander un basculement du premier vers le deuxième réseau.

4. Procédé selon la revendication 1, dans lequel l'aléa reçu à travers le premier réseau est construit par le premier opérateur à partir d'au moins une donnée aléatoire reçue du deuxième réseau.

5. Procédé selon la revendication 1, dans lequel une pluralité de clés maîtresses (K_GEN_{A}, ..., K_GEN_{N}) propres respectivement à une pluralité de réseaux sont mémorisées dans une table (KgenTab) en mémoire dans le module de sécurité (10), en association avec une pluralité d'index respectifs, un index identifiant un réseau déterminé.

6. Procédé selon la revendication 1, dans lequel le premier réseau obtient (18) un deuxième numéro d'identification (IMSI_{B}) de l'abonné dans le deuxième réseau (13), et envoie (18, 30) ledit deuxième numéro d'identification au module de sécurité, et au deuxième réseau.

7. Système de gestion de changement d'une clé d'authentification (K) entre un premier réseau (12) et un deuxième réseau (13), ladite clé étant associée à un numéro d'identification d'abonné (IMSI), comprenant :
- un module de sécurité (10) d'un terminal de communication à travers un réseau,
ledit système étant **caractérisé en ce que** :
ledit module de sécurité comprend :
- une première zone mémoire (104-0) adaptée pour mémoriser une première clé d'authentification de l'abonné (K = K_{A}) dans le premier réseau (12), et une clé maîtresse (K_GEN_{B}) de génération de clés propre au deuxième réseau (13), et une deuxième zone mémoire (104-1) adaptée pour mémoriser un premier numéro d'identification d'abonné (IMSI = IMSI_{A}), en association avec la première clé d'authentification,
- des moyens de réception d'aléa (104-2), agencés pour recevoir à travers le premier réseau par l'intermédiaire du terminal (11) un aléa (RAND) envoyé par le premier réseau,
- des deuxièmes moyens de réception, agencés pour recevoir un deuxième numéro d'identification (IMSI_{B}) de l'abonné dans le deuxième réseau, ledit deuxième numéro d'identification étant distinct du premier numéro d'identification, ledit deuxième numéro d'identification étant fourni par le premier réseau,
- des moyens de calcul (104-4), agencés pour calculer une deuxième clé d'authentification (K_{B}) de l'abonné dans le deuxième réseau (13) à partir de la clé maîtresse (K_GEN_{B}) propre au deuxième réseau et de l'aléa,
- des moyens de stockage (104-5), agencés pour stocker la deuxième clé d'authentification calculée, en association avec un deuxième numéro d'identification de l'abonné dans le deuxième réseau,
- des moyens de basculement, agencés pour basculer le terminal du premier vers le deuxième réseau, consécutivement à une authentification mutuelle avec le deuxième réseau,
- le premier réseau (12), comprend :
- des moyens (402) de génération d'aléas, agencés pour générer l'aléa (RAND),
- des moyens d'envoi (403), agencés pour envoyer au module de sécurité et au deuxième réseau l'aléa généré,
- le deuxième réseau (13), comprend :
- des moyens de réception (404), agencés pour recevoir l'aléa envoyé par le premier réseau,
- des moyens de calcul (405), agencés pour calculer la deuxième clé d'authentification (K_{B}) de l'abonné dans le deuxième réseau à partir de la clé maîtresse et de l'aléa,
- des moyens de mémorisation (406), agencés pour mémoriser la deuxième clé d'authentification calculée en association avec le deuxième numéro d'identification d'abonné dans le deuxième réseau.

8. Programme destiné à être installé dans une mémoire d'un module de sécurité, comprenant des instructions pour la mise en oeuvre des étapes du procédé de gestion de changement d'une clé d'authentification selon l'une des revendications 1 à 6 qui sont exécutées par le module de sécurité, lorsque le programme est exécuté par un processeur.

9. Programme destiné à être installé dans une mémoire d'un ordinateur dans un premier réseau, comprenant des instructions pour la mise en oeuvre des étapes du procédé de gestion de changement d'une clé d'authentification selon l'une des revendication 1 à 6 qui sont exécutées par le premier réseau, lorsque le programme est exécuté par un processeur.

10. Programme destiné à être installé dans une mémoire d'un ordinateur dans un deuxième réseau, comprenant des instructions pour la mise en oeuvre des étapes du procédé de gestion de changement d'une clé d'authentification selon l'une des revendications 1 à 6 qui sont exécutées par le deuxième réseau, lorsque le programme est exécuté par un processeur.

## Patentansprüche

1. Verfahren zum Ändern eines Authentifizierungsschlüssels (K), wobei der Schlüssel durch ein Sicherheitsmodul eines Kommunikationsendgeräts über ein Netz einer Teilnehmerkennungsnummer (IMSI) zugeordnet ist, wobei das Sicherheitsmodul einen ersten Authentifizierungsschlüssel (K_{A}) eines Teilnehmers in einem ersten Netz (12) in Zuordnung zu einer ersten Kennungsnummer (IMSI_{A}) des Teilnehmers in dem ersten Netz sowie einen Hauptschlüssel (K_GEN_{B}) für die Erzeugung von Schlüsseln, die zu einem zweiten Netz (13) gehören, speichert, wobei das Verfahren **dadurch gekennzeichnet ist, dass**:
- das erste Netz eine Zufallszahl (RAND) erzeugt und die Zufallszahl zu dem Sicherheitsmodul und dem zweiten Netz sendet (22, 22', 30),
- das Sicherheitsmodul eine zweite Kennungsnummer (IMSI_{B}) des Teilnehmers in dem zweiten Netz empfängt (20), wobei die zweite Kennungsnummer von der ersten Kennungsnummer verschieden ist, wobei die zweite Kennungsnummer von dem ersten Netz geliefert wird,
- das Sicherheitsmodul die von dem ersten Netz gesendete Zufallszahl empfängt (24, 24'), einen zweiten Authentifizierungsschlüssel (K_{B}) des Teilnehmers in dem zweiten Netz anhand des Hauptschlüssels und der empfangenen Zufallszahl berechnet (26) und den zweiten berechneten Authentifizierungsschlüssel (K = K_{B}) in Zuordnung zu einer zweiten Kennungsnummer (IMSI = IMSI_{B}) speichert (32),
- das zweite Netz den zweiten Authentifizierungsschlüssel (K_{B}) des Teilnehmers in dem zweiten Netz anhand des Hauptschlüssels und der von dem ersten Netz empfangenen Zufallszahl berechnet (34) und den zweiten Authentifizierungsschlüssel in Zuordnung zu einer zweiten Kennungsnummer des Teilnehmers in dem zweiten Netz speichert (36),
- das Endgerät folgend auf eine gegenseitige Authentifizierung (38) des Endgeräts und des zweiten Netzes von dem ersten Netz zu dem zweiten Netz wechselt.

2. Verfahren nach Anspruch 1, wobei der zweite Authentifizierungsschlüssel (K_{B}) und die zweite Kennungsnummer (IMSI_{B}) den ersten Authentifizierungsschlüssel bzw. die erste Kennungsnummer (IMSI) in dem Speicher im Sicherheitsmodul (10) ersetzen.

3. Verfahren nach Anspruch 2, das außerdem einen Schritt des Empfangens eines Aktualisierungsbefehls über das erste Netz durch das Sicherheitsmodul und einen Schritt des Schickens eines Auffrischungsbefehls der zugeordneten Kennungsnummer und des zugeordneten Authentifizierungsschlüssels durch das Sicherheitsmodul zu dem Endgerät, um einen Wechsel von dem ersten und dem zweiten Netz zu befehlen, umfasst.

4. Verfahren nach Anspruch 1, wobei die über das erste Netz empfangene Zufallszahl durch den ersten Operator anhand wenigstens einer Zufallsdateneinheit, die von dem zweiten Netz empfangen wird, konstruiert wird.

5. Verfahren nach Anspruch 1, wobei mehrere Hauptschlüssel (K_GEN_{A}, ..., K_GEN_{N}), die zu mehreren Netzen gehören, in einer Tabelle (KgenTab) im Speicher in dem Sicherheitsmodul (10) in Zuordnung zu mehreren jeweiligen Indizes gespeichert sind, wobei ein Index ein bestimmtes Netz identifiziert.

6. Verfahren nach Anspruch 1, wobei das erste Netz eine zweite Teilnehmerkennungsnummer (IMSI_{B}) in dem zweiten Netz (13) erhält (18) und die zweite Kennungsnummer zu dem Sicherheitsmodul und zu dem zweiten Netz sendet (18, 30).

7. System zum Steuern des Änderns eines Authentifizierungsschlüssels (K) zwischen einem ersten Netz (12) und einem zweiten Netz (13), wobei der Schlüssel einer Kennungsnummer (IMSI) eines Teilnehmers zugeordnet ist, das Folgendes umfasst:
- ein Sicherheitsmodul (10) eines Endgeräts für die Kommunikation über ein Netz,
wobei das System **dadurch gekennzeichnet ist, dass**
- das Sicherheitsmodul Folgendes umfasst:
- eine erste Speicherzone (104-0), die dafür ausgelegt ist, einen ersten Authentifizierungsschlüssel (K = K_{A}) des Teilnehmers in dem ersten Netz (12) und einen Hauptschlüssel (K_GGN_{B}) zum Erzeugen von Schlüsseln, die zu dem zweiten Netz (13) gehören, zu speichern, und eine zweite Speicherzone (104-1), die dafür ausgelegt ist, eine erste Kennungsnummer (IMSI = IMSI_{A}) des Teilnehmers in Zuordnung zu dem ersten Authentifizierungsschlüssel zu speichern,
- Mittel (104-2) zum Empfangen einer Zufallszahl, die dafür ausgelegt sind, mittels des Endgeräts (11) über das erste Netz eine Zufallszahl (RAND), die von dem ersten Netz gesendet wird, zu empfangen,
- zweite Empfangsmittel, die dafür ausgelegt sind, eine zweite Kennungsnummer (IMSI_{B}) des Teilnehmers in dem zweiten Netz zu empfangen, wobei die zweite Kennungsnummer von der ersten Kennungsnummer verschieden ist, wobei die zweite Kennungsnummer von dem ersten Netz geliefert wird,
- Rechenmittel (104-4), die dafür ausgelegt sind, einen zweiten Authentifizierungsschlüssel (K_{B}) des Teilnehmers in dem zweiten Netz (13) anhand des Hauptschlüssels (K_GEN_{B}), der zu dem zweiten Netz gehört, und der Zufallszahl zu berechnen,
- Speichermittel (104-5), die dafür ausgelegt sind, den zweiten berechneten Authentifizierungsschlüssel in Zuordnung zu einer zweiten Kennungsnummer des Teilnehmers in dem zweiten Netz zu speichern,
- Wechselmittel, die dafür ausgelegt sind, das Endgerät folgend auf eine gegenseitige Authentifizierung mit dem zweiten Netz von dem ersten zu dem zweiten Netz zu wechseln,
- das erste Netz (12) Folgendes umfasst:
- Mittel (402) zum Erzeugen von Zufallszahlen, die dafür ausgelegt sind, die Zufallszahl (RAND) zu erzeugen,
- Sendemittel (403), die dafür ausgelegt sind, die erzeugte Zufallszahl an das Sicherheitsmodul und an das zweite Netz zu senden,
- das zweite Netz (13) Folgendes umfasst:
- Empfangsmittel (404), die dafür ausgelegt sind, die von dem ersten Netz gesendete Zufallszahl zu empfangen,
- Rechenmittel (405), die dafür ausgelegt sind, den zweiten Authentifizierungsschlüssel (K_{B}) des Teilnehmers in dem zweiten Netz anhand des Hauptschlüssels und der Zufallszahl zu berechnen,
- Speichermittel (406), die dafür ausgelegt sind, den zweiten berechneten Authentifizierungsschlüssel in Zuordnung zu der zweiten Kennungsnummer des Teilnehmers in dem zweiten Netz zu speichern.

8. Programm, das dazu bestimmt ist, in einem Speicher eines Sicherheitsmoduls installiert zu werden, und Befehle für die Ausführung der Schritte des Verfahrens zum Steuern der Änderung eines Authentifizierungsschlüssels nach einem der Ansprüche 1 bis 6, die von dem Sicherheitsmodul ausgeführt werden, wenn das Programm durch einen Prozessor abgearbeitet wird, umfasst.

9. Programm, das dazu bestimmt ist, in einem Speicher eines Computers in einem ersten Netz installiert zu werden, und Befehle für die Ausführung der Schritte des Verfahrens zum Steuern des Änderns eines Authentifizierungsschlüssels nach einem der Ansprüche 1 bis 6, die von dem ersten Netz ausgeführt werden, wenn das Programm von einem Prozessor abgearbeitet wird, umfasst.

10. Programm, das dazu bestimmt ist, in einem Speicher eines Computers in einem zweiten Netz installiert zu werden, und Befehle für die Ausführung der Schritte des Verfahrens zum Steuern des Änderns eines Authentifizierungsschlüssels nach einem der Ansprüche 1 bis 6, die von dem zweiten Netz ausgeführt werden, wenn das Programm von einem Prozessor abgearbeitet wird, umfasst.

## Claims

1. Method for changing an authentication key (K), said key being associated with a subscriber identification number (IMSI) by a security module of a communication terminal through a network, the security module storing a first subscriber authentication key (K_{A}) in a first network (12) in association with a first identification number of the subscriber (IMSI_{A}) in the first network, as well as a keys-generating master key (K_GEN_{B}) specific to a second network (13), method **characterized in that**:
- the first network generates a random item (RAND) and dispatches (22, 22', 30) said random item to the security module and to the second network,
- the security module receives (20) a second identification number (IMSI_{B}) of the subscriber in the second network, said second identification number being distinct from the first identification number, said second identification number being provided by the first network,
- the security module receives (24, 24') the random item dispatched by the first network, calculates (26), a second authentication key (K_{B}) of the subscriber in the second network on the basis of the master key and of the random item received and stores (32) the second authentication key calculated (K=K_{B}), in association with a second identification number (IMSI= IMSI_{B}),
- the second network calculates (34) the second authentication key (K_{B}) of the subscriber in the second network on the basis of the master key and of the random item which is received from the first network, and stores (36) the second authentication key in association with a second subscriber identification number in the second network,
- the terminal is switched from the first network to the second network, pursuant to a mutual authentication (38) of the terminal and of the second network.

2. Method according to Claim 1, in which the second authentication key (K_{B}) and the second identification number (IMSI_{B}) replace respectively the first authentication key and the first identification number (IMSI) in memory in the security module (10).

3. Method according to Claim 2, furthermore comprising a step of reception through the first network by the security module of an update command, and a step of dispatching by the security module to the terminal of an associated identification number and authentication key refresh command so as to command a switching from the first to the second network.

4. Method according to Claim 1, in which the random item received through the first network is constructed by the first operator on the basis of at least one random datum received from the second network.

5. Method according to Claim 1, in which a plurality of master keys (K_GEN_{A},..., K_GEN_{N}) specific respectively to a plurality of networks are stored in a table (KgenTab) in memory in the security module (10), in association with a plurality of respective indices, an index identifying a determined network.

6. Method according to Claim 1, in which the first network obtains (18) a second identification number (IMSI_{B}) of the subscriber in the second network (13), and dispatches (18, 30) said second identification number to the security module, and to the second network.

7. System for managing changing of an authentication key (K) between a first network (12) and a second network (13), said key being associated with a subscriber identification number (IMSI), comprising:
- a security module (10) of a communication terminal through a network,
said system being **characterized in that**:
- said security module comprises:
- a first memory area (104-0) adapted to store a first authentication key of the subscriber (K = K_{A}) in the first network (12), and a keys-generating master key (K_GEN_{B}) specific to the second network (13), and a second memory area (104-1) adapted to store a first subscriber identification number (IMSI = IMSI_{A}), in association with the first authentication key,
- random item reception means (104-2), designed to receive through the first network by way of the terminal (11) a random item (RAND) dispatched by the first network,
- second reception means, designed to receive a second identification number (IMSI_{B}) of the subscriber in the second network, said second identification number being distinct from the first identification number, said second identification number being provided by the first network,
- calculation means (104-4), designed to calculate a second authentication key (K_{B}) of the subscriber in the second network (13) on the basis of the master key (K_GEN_{B}) specific to the second network and of the random item,
- storage means (104-5), designed to store the second authentication key calculated, in association with a second identification number of the subscriber in the second network,
- switching means, designed to switch the terminal from the first to the second network, pursuant to a mutual authentication with the second network,
- the first network (12), comprises:
- means (402) for generating random items, designed to generate the random item (RAND),
- dispatching means (403), designed to dispatch the random item generated to the security module and to the second network,
- the second network (13), comprises:
- reception means (404), designed to receive the random item dispatched by the first network,
- calculation means (405), designed to calculate the second authentication key (K_{B}) of the subscriber in the second network on the basis of the master key and of the random item,
- storage means (406), designed to store the second authentication key calculated in association with the second subscriber identification number in the second network.

8. Program intended to be installed in a memory of a security module, comprising instructions for the implementation of the steps of the method for managing changing of an authentication key according to one of Claims 1 to 6 which are executed by the security module, when the program is executed by a processor.

9. Program intended to be installed in a memory of a computer in a first network, comprising instructions for the implementation of the steps of the method for managing changing of an authentication key according to one of Claims 1 to 6 which are executed by the first network, when the program is executed by a processor.

10. Program intended to be installed in a memory of a computer in a second network, comprising instructions for the implementation of the steps of the method for managing changing of an authentication key according to one of Claims 1 to 6 which are executed by the second network, when the program is executed by a processor.
